# FASCICULE DE BREVET EUROPEEN

(11) **EP 1 750 991 B1**
(45) Date de publication et mention de la délivrance du brevet: **14.05.2008**
(21) Numéro de dépôt: 05757127.5
(22) Date de dépôt: 15.04.2005
(51) Int. Cl.: B62D 21/11, B62D 65/00, B62D 21/09

(54) **PROCÉDÉ ET DISPOSITIF DE FABRICATION D'UN BERCEAU DE VÉHICULE AUTOMOBILE COMPRENANT AU MOINS UNE DOUILLE ÉVASÉE DESTINÉE À RECEVOIR UN PLOT DE FILTRATION, BERCEAU ET VÉHICULE CORRESPONDANTS**
VERFAHREN UND VORRICHTUNG ZUR HERSTELLUNG EINES KRAFTFAHRZEUGTRÄGERS MIT MINDESTENS EINER AUFGEWEITETEN BUCHSE ZUR AUFNAHME EINES SILENTBLOCKS, ENTSPRECHENDER TRÄGER UND FAHRZEUG
METHOD AND DEVICE FOR MAKING A MOTOR VEHICLE CRADLE COMPRISING AT LEAST A FLARED BUSHING FOR RECEIVING A SILENT BLOCK, CORRESPONDING CRADLE AND VEHICLE

(30) Priorité: 17.05.2004 FR 0405336
(43) Date de publication de la demande: 14.02.2007
(73) Titulaire: Auto Chassis International SNC Lem Ctc 0.06, 75086 Le Mans Cédex 9 (FR)
(72) Inventeur: ROULIN, François, F-92000 Nanterre (FR); CHABROL, Thierry, F-78150 Le Chesnay (FR)
(74) Mandataire: Guyon, Rodolphe C.
(86) Numéro de dépôt international: PCT/FR2005/000915
(87) Numéro de publication internationale: WO 2005/123488

(56) Documents cités:
- EP-A- 0 927 680
- WO-A-99/42234
- GB-A- 2 340 794
- US-A- 4 597 687

## Description

Le domaine de l'invention est celui de l'industrie automobile. Plus précisément, l'invention concerne les berceaux supportant les moteurs de véhicules automobiles.

Selon une technique courante, les berceaux de moteur comprennent deux coquilles réalisées en tôle emboutie et assemblées entre elles, par exemple par soudage.

L'une des fonctions de ces berceaux est de supporter les efforts engendrés par le couple moteur lors de phases d'accélération ou de décélération du véhicule.

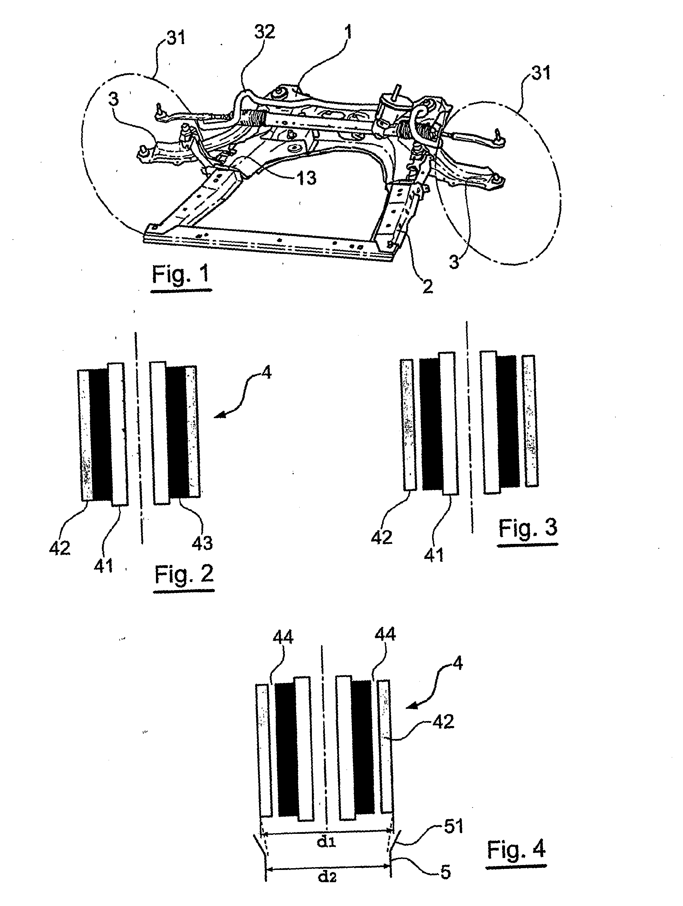

On rappelle, en référence à la figure 1, qu'un tel berceau, autrement appelé « mini berceau » par l'homme du métier, est solidarisé à la caisse du véhicule en partie arrière et, en partie avant, à un absorbeur de chocs 2 ou « add-on » fixé sur des platines 13 du berceau.

En outre, un tel berceau est couplé à des bras inférieurs 3 supports de roues ou portant des moyens supports de roues 31 (représentés symboliquement), une barre anti-dévers 32 reliant ces bras et étant maintenue sur le berceau.

Pour des raisons de confort acoustique, il est courant d'ajouter un élément de filtration, par exemple du caoutchouc, entre le berceau et la caisse du véhicule.

Cette filtration est un élément essentiel dans la façon dont le conducteur perçoit les comportements routiers de son véhicule ainsi que le confort de conduite.

Une telle filtration est généralement obtenue à l'aide de plots de filtration assurant la liaison mécanique entre le berceau et la caisse et comportant au moins une partie en caoutchouc (ou en un autre matériau filtrant les vibrations) emmanchée entre deux armatures métalliques.

De tels plots de filtration sont illustrés schématiquement par la figure 2.

Tel que cela apparaît, les plots de filtration 4 de ce type sont constitués de deux armatures, l'une intérieure 41 et l'autre extérieure 42, entre lesquelles est injecté un matériau filtrant 43, généralement du caoutchouc.

Classiquement, l'armature intérieure est un tube métallique, l'armature extérieure pouvant être soit métallique soit plastique.

La technique de fabrication de ces plots engendre un problème bien connu.

En effet, après injection du caoutchouc entre les armatures, le caoutchouc 43, en se solidifiant, réduit de volume et tend, par conséquent, à se décoller de l'armature extérieure 42, tel qu'illustré par la figure 3. Ce phénomène est désigné par le terme de «rétreint».

La liaison entre le caoutchouc et l'armature extérieure n'étant plus satisfaisante, il est nécessaire de « calibrer » à nouveau les plots de filtration.

Ceci est obtenu par une opération spécifique consistant à réduire le diamètre de l'armature extérieure en vue de supprimer le vide engendré par le rétreint.

Lorsque l'armature extérieure est métallique, cette opération est prévue dans le procédé de fabrication du plot : une machine prévue à cet effet comprime l'armature extérieure. Les plots de filtration livrés sont donc dépourvus du vide engendré par le rétreint.

Bien sûr, une telle machine a un coût qui tend à augmenter sensiblement le prix des plots de filtration.

Dans le cas d'une armature extérieure en plastique, les plots de filtration sont généralement livrés tandis qu'ils présentent encore le vide engendré par le rétreint.

Aussi, pour éliminer ce vide, on prévoit de monter sur les berceaux une douille spéciale : la douille est réalisée dans un tube métallique présentant une épaisseur relativement importante de façon à pouvoir usiner une extrémité de la douille. L'usinage vise à réaliser un chanfrein sur le diamètre interne de la douille.

Un exemple de cette technique antérieure est divulgué par le document GB2340794.

Ce chanfrein s'étend entre un diamètre correspondant à celui de l'armature externe du plot de filtration avant recalibrage et un diamètre correspondant à celui de l'armature externe du plot de filtration après recalibrage.

Ainsi, une fois le plot' de filtration emmanché dans une telle douille chanfreinée, l'armature externe (dont la structure plastique permet de subir et de supporter des variations de diamètres relativement importantes) réduit de diamètre jusqu'à supprimer le vide engendré par le rétreint.

Toutefois, encore une fois, le coût de l'opération est relativement important.

En effet, on comprend qu'il est nécessaire d'usiner les douilles unes à unes. Cet usinage, induit donc un coût de fabrication qui se répercute sur l'ensemble du berceau, ce qui n'est pas souhaitable.

De plus, chaque douille est réalisée dans un tube d'une épaisseur suffisamment importante pour permettre l'usinage d'un chanfrein qui peut s'étendre sur plusieurs millimètres. Ces douilles nécessitent donc d'être réalisées dans des tubes qui s'avèrent dans la pratique relativement coûteux.

En outre, ces tubes, de par leur épaisseur, constituent des pièces qui tentent à augmenter le poids du berceau, ce que l'on cherche à éviter.

L'invention a notamment pour objectif de pallier les inconvénients de l'art antérieur.

Plus précisément, l'invention a pour objectif de proposer un berceau de véhicule automobile qui permette de supprimer les effets du rétreint sur des plots de filtration de façon moins coûteuse que les techniques de l'art antérieur.

En ce sens, l'invention a également pour objectif de fournir un tel berceau qui permette de supprimer les étapes d'usinage spécifiques à la suppression des effets du rétreint, telles que celles mises en oeuvre dans l'art antérieur.

Un autre objectif de l'invention est de proposer un tel berceau qui permette, pour la réalisation des douilles de réception des plots de filtration, l'emploi de matériaux notablement moins épais que ceux utilisés pour les entretoises des berceaux antérieurs.

L'invention a aussi pour objectif de fournir un tel berceau qui soit simple de conception et facile à mettre en oeuvre.

Un autre objectif de l'invention est de proposer une technique de fabrication d'un tel berceau.

L'invention a encore pour objectif de fournir une telle technique qui puisse être exécutée simplement, rapidement et de façon peu coûteuse.

Ces objectifs, ainsi que d'autres qui apparaîtront par la suite, sont atteints grâce à l'invention qui a pour objet un procédé de fabrication d'un berceau de véhicule automobile comprenant deux coquilles assemblées entre elles, l'une au moins desdites coquilles étant destinée à recueillir au moins un plot de filtration par l'intermédiaire d'au moins une douille, caractérisé en ce qu'il comprend une étape de déformation de ladite douille prévue de façon à donner à au moins une extrémité de ladite douille une forme évasée.

De cette façon, la douille dans laquelle on vient d'emmancher le plot de filtration peut être réalisée dans un tube métallique présentant une épaisseur notablement réduite par rapport aux douilles chanfreinées mises en oeuvre dans l'art antérieur.

Ces douilles pourront également être réalisées dans une tôle roulée et agrafée.

Dans les deux cas, de telles douilles s'avèrent sensiblement moins coûteuses que les douilles chanfreinées.

Par ailleurs, comme cela va apparaître plus clairement par la suite, un procédé par lequel on déforme la douille permet de supprimer les phases d'usinage mentionnées précédemment en référence à l'art antérieur.

En d'autres termes, on oppose le terme « d'étape de déformation » au terme « d'usinage » dans le sens où l'invention est prévue pour procurer à la douille un évasement sans enlèvement de matière.

Selon une solution préférée, ladite étape de déformation est réalisée au cours d'une étape de montage de ladite douille sur l'une desdites coquilles, dite coquille porteuse.

On comprend donc que l'étape de déformation est réalisée en temps masqué au cours de l'étape de montage de la douille.

Ainsi, l'invention permet d'envisager des gains tant sur le plan du coût que sur le plan logistique dans la mesure où on supprime un poste de travail intermédiaire par rapport à l'art antérieur.

Selon une solution avantageuse, ladite ou lesdites douilles sont emmanchées sur ladite coquille porteuse à l'encontre d'un élément déformant visant à provoquer un évasement d'une extrémité de ladite douille.

On obtient de cette façon une solution simple et efficace pour combiner les opérations d'emmanchement et d'évasement de la douille, sur la coquille porteuse.

Avantageusement, ladite ou lesdites douilles sont emmanchées sur ladite coquille porteuse avant l'assemblage de celle-ci avec l'autre desdites coquilles.

On dispose ainsi d'une plus grande facilité de manoeuvre, en disposant de tout l'espace disponible autour de la coquille porteuse.

Avantageusement, lesdites coquilles sont obtenues lors d'une étape initiale d'emboutissage.

Dans ce cas, le procédé de fabrication comprend préférentiellement une étape de réalisation, dans l'une desdites coquilles, d'au moins un orifice au travers duquel un plot de filtration est destiné à être monté, le procédé comprenant également une étape de réalisation d'un bord tombé autour dudit orifice de façon à permettre un emmanchement dudit plot dans ledit orifice.

Selon une solution avantageuse, ladite étape de montage de la douille est réalisée de façon que ladite extrémité évasée s'étende du côté de ladite coquille porteuse correspondant à la face externe dudit berceau.

Ainsi, lors de l'emmanchement du plot de filtration dans la douille, l'extrémité évasée tend à être poussée contre la coquille porteuse sous l'effet de l'emmanchement du plot, ce qui permet de conserver la position et la forme de l'évasement.

Préférentiellement, le procédé de fabrication comprend une étape de montage d'un plot de filtration dans ladite douille, ledit plot comprenant une partie de caoutchouc entre deux armatures coaxiales, l'une interne et l'autre externe, ladite étape de montage étant réalisée en emmanchant ledit plot dans ladite douille en faisant pénétrer ledit plot par ladite extrémité évasée de la douille.

De .cette façon, à l'issue du procédé, on obtient un berceau prêt à être monté sur le véhicule, le berceau étant pré-équipé des plots de filtration auxquels on aura fait subir une opération de re-calibrage.

L' invention concerne également un dispositif pour la mise en oeuvre d'un procédé de fabrication d'un berceau tel que décrit précédemment, le dispositif comprenant :
- un organe femelle présentant un logement destiné à accueillir ladite douille ;
- un organe mâle comprenant un élément déformant destiné à former ladite extrémité évasée lorsque ledit organe mâle est emmanché dans ladite douille placée dans ledit organe femelle.

L'invention concerne aussi un berceau de véhicule automobile comprenant deux coquilles assemblées entre elles, ledit berceau étant destiné à être associé à au moins un plot de filtration du type comprenant une partie en caoutchouc maintenue entre deux armatures coaxiales, caractérisé en ce qu'il comprend au moins une douille de réception dudit plot, la paroi de ladite douille présentant, à au moins une de ses extrémités, une déformation formant un évasement.

Comme déjà indiqué, un tel berceau peut être obtenu avec un prix de revient notablement réduit par rapport aux berceaux de l'art antérieur, notamment du fait du faible coût de la douille.

Avantageusement, ladite douille est emmanchée dans un bord tombé ménagé sur l'une desdites coquilles, ladite extrémité évasée de la douille s'étendant au-delà dudit bord tombé.

Préférentiellement, le berceau comprend au moins un plot de filtration présentant une armature externe réalisée en matière plastique.

Une telle armature présente en effet une excellente aptitude à une réduction éventuellement importante de son diamètre.

Avantageusement, ladite extrémité évasée s'étend au moins partiellement à l'extérieur dudit berceau.

Dans ce cas, ledit ou lesdits plots de filtration présentent préférentiellement un prolongement sous lequel est ménagée une gorge annulaire destinée à former logement pour ladite extrémité évasée de la douille.

Ainsi, l'extrémité évasée faisant saillie de la coquille avant montage du plot de filtration est, après montage, masquée et isolée par le plot lui-même.

Selon une solution avantageuse, ledit ou lesdits plots de filtration présentent un rebord destiné à venir en butée sur l'une desdites coquilles.

Dans ce cas, ledit rebord s'étend préférentiellement autour de ladite gorge annulaire.

L'invention concerne encore un véhicule automobile équipé d'un berceau comprenant deux coquilles assemblées entre elles, ledit berceau étant associé à au moins un plot de filtration du type comprenant une partie en caoutchouc emmanchée entre deux armatures coaxiales, caractérisé en ce que ledit berceau comprend au moins une douille de réception dudit plot dont la paroi présente à au moins une de ses extrémités une déformation formant un évasement.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue en perspective d'un berceau de véhicule automobile dans son environnement immédiat ;
- la figure 2 est une vue schématique d'un plot de filtration ;
- la figure 3 est une vue schématique d'un plot de filtration présentant un rétreint ;
- la figure 4 illustre schématiquement une technique de re-calibrage d'un plot de filtration ;
- la figure 5 est une vue partielle d'un berceau selon l'invention, équipé d'un plot de filtration ;
- les figures 6 et 7 sont chacune des vues d'une étape du montage d'une douille sur un berceau, par la mise en oeuvre d'un procédé selon l'invention.

Tel que déjà indiqué précédemment, le principe de l'invention réside dans le fait d'obtenir une déformation, sans usinage (c'est-à-dire sans enlèvement de matière), d'une douille destinée à recevoir un plot de filtration, de façon qu'une extrémité de cette douille présente une forme évasée.

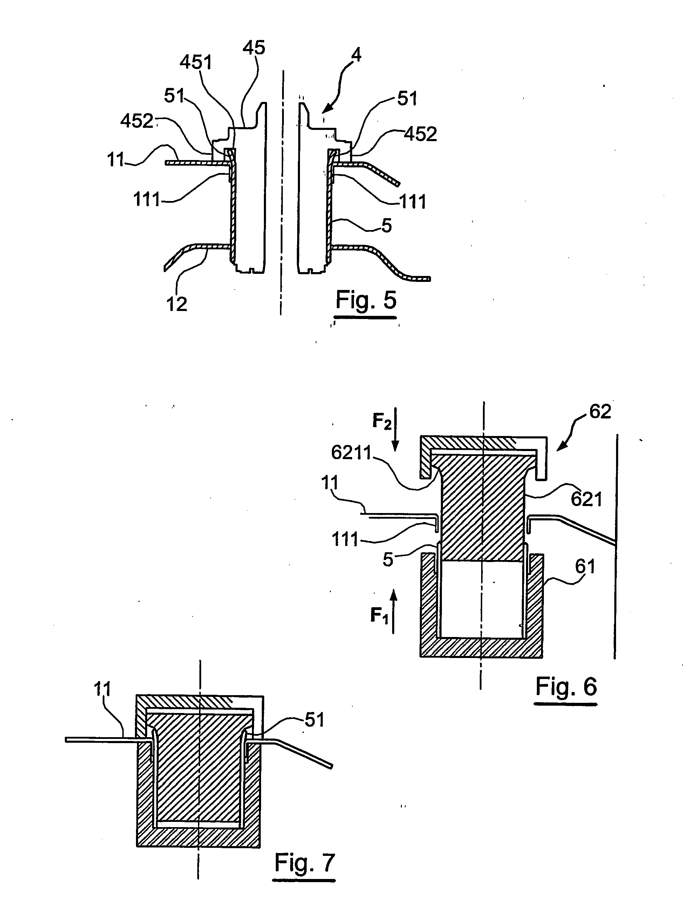

Ceci est illustré par la figure 5 qui montre partiellement un berceau comprenant une coquille supérieure 11 et une coquille inférieure 12 entre lesquelles s'étend une douille 5 dont une extrémité 51 est évasée.

Comme cela va apparaître plus clairement par la suite, une douille ainsi constituée permet, tel qu'illustré par la figure 4, de supprimer le rétreint 44 que présente un plot de filtration 4 (figure 4). Cela est obtenu au fur et à mesure de l'emmanchement du plot 4 dans la douille 5, en faisant passer le diamètre de l'armature externe du plot d'un diamètre d1 à un diamètre d2 inférieur à d1 cette réduction de diamètre étant permise par la forme évasée de l'extrémité 51 de la douille.

Tel que cela apparaît sur la figure 5, la coquille supérieure 11, désignée ci-après par le terme de coquille porteuse, présente un orifice bordé par un bord tombé 111 dans lequel le plot 4 est destiné à être emmanché.

De plus, selon le présent mode de réalisation, le bord tombé 111 est dirigé vers l'intérieur du berceau, l'extrémité évasée 51 de la douille 5 s'étendant au-delà du bord tombé 111, vers l'extérieur du berceau.

Par ailleurs, ce berceau est pourvu d'un plot de filtration 4 (ou de plusieurs) du type de ceux décrits précédemment, comprenant un matériau caoutchouc injecté entre une armature interne et une armature externe, cette dernière étant en l'occurrence réalisée dans un matériau plastique.

En outre, selon le présent mode de réalisation, le plot de filtration 4 présente un prolongement 45 sous lequel est ménagée une gorge annulaire 451 formant logement pour l'extrémité évasée 51 de la douille 5.

Le prolongement 45 présente également un rebord 452 destiné à venir en butée sur la coquille porteuse 11.

On note que ce rebord 452 s'étend autour de la gorge annulaire 451 coaxialement à celle-ci.

On note également que le rebord 452 présente des dimensions (en épaisseur et en hauteur) appropriées pour former une butée suffisamment résistante.

Le procédé de fabrication d'un berceau selon l'invention va maintenant être explicité en détails en référence aux figures 6 et 7.

Selon le présent mode de réalisation, les coquilles supérieure et inférieure du berceau sont réalisées par une technique d'emboutissage.

La coquille porteuse 11 (en l'occurrence la coquille supérieure du berceau) est ensuite découpée, par exemple par une technique de poinçonnage, de façon à ménager un orifice au travers duquel un plot de filtration est destiné à être monté.

La bordure de l'orifice réalisée est ensuite repliée de façon que cet orifice soit bordé par un bord tombé 111 s'étendant du côté de la face de la coquille porteuse 11 correspondant à l'intérieur du berceau.

On procède ensuite à une étape de montage d'une douille 5 sur la coquille porteuse 11, étape de montage au cours de laquelle une extrémité de la douille 5 va être déformée de façon à présenter une forme évasée.

Ceci est obtenu à l'aide d'un dispositif comprenant un organe femelle 61 présentant un logement destiné à accueillir la douille 5, et un organe mâle 62 comprenant un élément déformant 621 destiné à former l'extrémité évasée au fur et à mesure que l'organe mâle est emmanché dans la douille placée dans l'organe femelle 61.

Plus précisément, la déformation est obtenue à l'aide d'une portion évasée 6211 que présente l'élément déformant 621.

A l'aide d'un tel dispositif, la douille 5 est emmanchée à l'intérieur du bord tombé 111 de la coquille porteuse 11 en dirigeant l'organe femelle 61 par rapport à la coquille porteuse 11 tel qu'indiqué par la flèche F1.

Cet emmanchement est réalisé à l'encontre de l'élément déformant lorsque l'extrémité de la douille 5 est amenée en appui sur la portion évasée 6211 de l'élément déformant 621, l'organe mâle étant dirigé vers l'intérieur de la douille tel qu'indiqué par la flèche F2.

Les mouvements relatifs de l'organe mâle et de l'organe femelle 61 sont poursuivis jusqu'à ce qu'ils occupent une position telle que celle illustrée par la figure 7, provoquant la déformation de l'extrémité 51 de la douille et lui donnant par conséquent une forme évasée correspondant à au moins une partie de la portion 6211 de l'élément déformant 621.

Tel que cela apparaît clairement sur les figures 6.et 7, le montage de la douille est réalisé de façon que l'extrémité évasée 51 de la douille s'étende du côté de la coquille porteuse correspondant à la face externe du berceau.

On note que les étapes de montage de la douille qui viennent d'être décrites sont préférentiellement réalisées avant l'assemblage de la coquille porteuse avec l'autre coquille du berceau.

Ensuite, un plot de filtration 4 est emmanché dans la douille en faisant pénétrer ce plot par l'extrémité évasée de la douille tel que déjà mentionné en référence à la figure 4.

D'autres modes de réalisation peuvent bien sûr être envisagés sans sortir du cadre de l'invention, notamment en prévoyant, dans le cas d'architectures de berceau spécifiques, que la coquille porteuse est constituée par la coquille inférieure du berceau, ou que chacune des coquilles supérieure et inférieure constitue une coquille porteuse.

## Revendications

1. Procédé de fabrication d'un berceau de véhicule automobile comprenant deux coquilles (11), (12) assemblées entre elles, l'une au moins desdites coquilles étant destinée à recueillir au moins un plot de filtration (4) par l'intermédiaire d'au moins une douille (5),
**caractérisé en ce qu'**il comprend une étape de déformation de ladite douille (5) prévue de façon à donner à au moins une extrémité (51) de ladite douille une forme évasée.

2. Procédé de fabrication selon la revendication 1, **caractérisé en ce que** ladite étape de déformation est réalisée au cours d'une étape de montage de ladite douille (5) sur l'une desdites coquilles (11), dite coquille porteuse.

3. Procédé de fabrication selon la revendication 2, **caractérisé en ce que** ladite ou lesdites douilles (5) sont emmanchées sur ladite coquille porteuse (11) à l'encontre d'un élément déformant (621) visant à provoquer un évasement d'une extrémité de ladite douille (5).

4. Procédé de fabrication selon l'une des revendications 2 et 3, **caractérisé en ce que** ladite ou lesdites douilles (5) sont emmanchées sur ladite coquille porteuse (11) avant l'assemblage de celle-ci avec l'autre desdites coquilles (12).

5. Procédé de fabrication selon l'une quelconque des revendications 1 à 4, **caractérisé en ce que** lesdites coquilles (11), (12) sont obtenues lors d'une étape initiale d'emboutissage.

6. Procédé de fabrication selon la revendication 5, **caractérisé en ce qu'**il comprend une étape de réalisation, dans l'une desdites coquilles (11), d'au moins un orifice au travers duquel un plot de filtration (4) est destiné à être monté, le procédé comprenant également une étape de réalisation d'un bord tombé (111) autour dudit orifice de façon à permettre un emmanchement dudit plot (4) dans ledit orifice.

7. Procédé de fabrication selon l'une quelconque des revendications 2 à 6, **caractérisé en ce que** ladite étape de montage de la douille (5) est réalisée de façon que ladite extrémité évasée (51) s'étende du côté de ladite coquille porteuse (11) correspondant à la face externe dudit berceau.

8. Procédé de fabrication selon l'une quelconque des revendications 1 à 7, **caractérisé en ce qu'**il comprend une étape de montage d'un plot de filtration (4) dans ladite douille (5), ledit plot (4) comprenant une partie de caoutchouc (43) entre deux armatures coaxiales (41), (42), l'une interne (41) et l'autre externe (42), ladite, étape de montage étant réalisée en emmanchant ledit plot (4) dans ladite douille (5) en faisant pénétrer ledit plot par ladite extrémité évasée (51) de la douille (5).

9. Dispositif de mise en oeuvre d'un procédé de fabrication d'un berceau selon l'une quelconque des revendications 1 à 8, **caractérisé en ce qu'**il comprend :
- un organe femelle (61) présentant un logement destiné à accueillir ladite douille (5) ;
- un organe mâle (62) comprenant un élément déformant (621) destiné à former ladite extrémité évasée (51) lorsque ledit organe mâle (62) est emmanché dans ladite douille (5) placée dans ledit organe femelle (61).

10. Berceau de véhicule automobile fabriqué selon un procédé selon une des revendications 1 à 8, comprenant deux coquilles (41), (42) assemblées entre elles, ledit berceau étant destiné à être associé à au moins un plot de filtration (4) du type comprenant une partie en caoutchouc (43) maintenue entre deux armatures coaxiales (41), (42),
**caractérisé en ce qu'**il comprend au moins une douille (5) de réception dudit plot (4), la paroi de ladite douille présentant, à au moins une de ses extrémités (51), une déformation formant un évasement.

11. Berceau de véhicule automobile selon la revendication 10, **caractérisé en ce que** ladite douille (5) est emmanchée dans un bord tombé (111) ménagé sur l'une desdites coquilles (11), ladite extrémité évasée de la douille s'étendant au-delà dudit bord tombé.

12. Berceau de véhicule automobile selon l'une des revendications 10 et 11, **caractérisé en ce qu'**il comprend au moins un plot de filtration (4) présentant une armature externe (42) réalisée en matière plastique.

13. Berceau de véhicule automobile selon l'une quelconque des revendications 10 à 12, **caractérisé en ce que** ladite extrémité (51) s'étend au moins partiellement à l'extérieur dudit berceau.

14. Berceau de véhicule automobile selon la revendication 13, **caractérisé en ce que** ledit ou lesdits plots de filtration (4) présentent un prolongement (45) sous lequel est ménagée une gorge annulaire (451) destinée à former logement pour ladite extrémité évasée (51) de la douille (5).

15. Berceau de véhicule automobile selon l'une quelconque des revendications 10 à 14, **caractérisé en ce que** ledit ou lesdits plots de filtration (4) présentent un rebord (452) destiné à venir en butée sur l'une desdites coquilles.

16. Berceau de véhicule automobile selon les revendications 14 et 15, **caractérisé en ce que** ledit rebord (452) s'étend autour de ladite gorge annulaire (451).

17. Véhicule automobile équipé d'un berceau comprenant deux coquilles (11), (12) assemblées entre elles, ledit berceau étant associé à au moins un plot de filtration (4) du type comprenant une partie en caoutchouc (43) emmanchée entre deux armatures coaxiales (41), (42),
**caractérisé en ce que** ledit berceau comprend au moins une douille de réception (5) dudit plot (4) dont la paroi présente à au moins une de ses extrémités (51) une déformation formant un évasement.

## Claims

1. Method of manufacturing a motor vehicle cradle comprising two shells (11), (12) joined together, one at least of said shells being designed to accommodate at least one silent block (4) through the intermediary of at least one bushing (5), **characterized in that** it comprises a step which consists in deforming said bushing (5), provided so as to give at least one end (51) of said bushing a flared shape.

2. Manufacturing method according to Claim 1, **characterized in that** said deformation step is performed during the step of mounting said bushing (5) on one of said shells (11), known as the carrier shell.

3. Manufacturing method according to Claim 2, **characterized in that** said bushing(s) (5) is/are fitted on said carrier shell (11) counter to a deforming element (621) designed to bring about flaring of one end of said bushing (5).

4. Manufacturing method according to either of Claims 2 and 3, **characterized in that** said bushing(s) (5) is/are fitted on said carrier shell (11) before the latter is joined together with the other of said shells (12).

5. Manufacturing method according to any one of Claims 1 to 4, **characterized in that** said shells (11) (12) are obtained during an initial deep-drawing step.

6. Manufacturing method according to Claim 5, **characterized in that** it comprises a step in which, in one of said shells (11), at least one orifice is produced, through which a silent block (4) is intended to be mounted, the method also comprising a step in which a turned-down edge (111) is produced around said orifice so as to make it possible to fit said block (4) in said orifice.

7. Manufacturing method according to any one of Claims 2 to 6, **characterized in that** said step of mounting the bushing (5) is performed in such a way that said flared end (51) extends on the side of said carrier shell (11) corresponding to the outer face of said cradle.

8. Manufacturing method according to any one of Claims 1 to 7, **characterized in that** it comprises a step of mounting a silent block (4) in said bushing (5), said block (4) comprising a rubber part (43) between two coaxial reinforcements (41), (42), an inner one (41) and an outer one (42), said mounting step being performed by fitting said block (4) in said bushing (5) by introducing said block via said flared end (51) of the bushing (5).

9. Device for implementing a method of manufacturing a cradle according to any one of Claims 1 to 8, **characterized in that** it comprises:
- a female member (61) having a receptacle designed to accommodate said bushing (5);
- a male member (62) comprising a deforming element (621) intended to form said flared end (51) when said male member (62) is fitted in said bushing (5) placed in said female member (61).

10. Motor vehicle cradle, manufactured by a method according to one of Claims 1 to 8, comprising two shells (41), (42) joined together, said cradle being designed to be associated with at least one silent block (4) of the type comprising a rubber part (43) held between two coaxial reinforcements (41), (42), **characterized in that** it comprises at least one bushing (5) for receiving said block (4), the wall of said bushing having, at at least one of its ends (51), a deformation forming a flare.

11. Motor vehicle cradle according to Claim 10, **characterized in that** said bushing (5) is fitted inside a turned-down edge (111) provided on one of said shells (11), said flared end of the bushing extending beyond said turned-down edge.

12. Motor vehicle cradle according to either of Claims 10 and 11, **characterized in that** it comprises at least one silent block (4) having an outer reinforcement (42) made of plastic.

13. Motor vehicle cradle according to any one of Claims 10 to 12, **characterized in that** said end (51) extends at least in part outside said cradle.

14. Motor vehicle cradle according to Claim 13, **characterized in that** said silent block(s) (4) has/have an extension (45) under which is provided an annular groove (451) designed to form a receptacle for said flared end (51) of the bushing (5).

15. Motor vehicle cradle according to any one of Claims 10 to 14, **characterized in that** said silent block(s) (4) has/have a flange (452) designed to abut against one of said shells.

16. Motor vehicle cradle according to Claims 14 and 15, **characterized in that** said flange (452) extends around said annular groove (451).

17. Motor vehicle equipped with a cradle comprising two shells (11), (12) joined together, said cradle being associated with at least one silent block (4) of the type comprising a rubber part (43) fitted between two coaxial reinforcements (41), (42), **characterized in that** said cradle comprises at least one bushing (5) for receiving said block (4), of which the wall has at at least one of its ends (51) a deformation forming a flare.

## Patentansprüche

1. Verfahren für die Herstellung eines Kraftfahrzeugträgers, der zwei Schalen (11), (12) enthält, die zusammengefügt sind, wobei wenigstens eine der Schalen dazu vorgesehen ist, über wenigstens eine Hülse (5) wenigstens einen Silentblock (4) aufzunehmen,
**dadurch gekennzeichnet, dass** es einen Schritt des Verformens der Hülse (5) enthält, der dazu vorgesehen ist, wenigstens einem Ende (51) der Hülse eine aufgeweitete Form zu verleihen.

2. Herstellungsverfahren nach Anspruch 1, **dadurch gekennzeichnet, dass** der Verformungsschritt während eines Schrittes der Montage der Hülse (5) an einer der Schalen (11), der so genannten Trägerschale, ausgeführt wird.

3. Herstellungsverfahren nach Anspruch 2, **dadurch gekennzeichnet, dass** die Hülsen (5) auf die Trägerschale (11) gegen ein verformendes Element (621) aufgedrückt werden, um eine Aufweitung eines Endes der Hülse (5) zu bewerkstelligen.

4. Herstellungsverfahren nach einem der Ansprüche 2 und 3, **dadurch gekennzeichnet, dass** die Hülse(n) (5) auf die Trägerschale (11) aufgedrückt wird (werden), bevor diese mit der anderen Schale (12) zusammengefügt wird.

5. Herstellungsverfahren nach einem der Ansprüche 1 bis 4, **dadurch gekennzeichnet, dass** die Schalen (11), (12) in einem anfänglichen Pressschritt erhalten werden.

6. Herstellungsverfahren nach Anspruch 5, **dadurch gekennzeichnet, dass** es einen Schritt zum Verwirklichen wenigstens einer Öffnung in einer der Schalen (11) enthält, durch die ein Silentblock (4) angebracht werden soll, wobei das Verfahren außerdem einen Schritt des Verwirklichens einer Bördelung (111) um die Öffnung enthält, derart, dass ein Eindrücken des Blocks (4) in die Öffnung möglich ist.

7. Herstellungsverfahren nach einem der Ansprüche 2 bis 6, **dadurch gekennzeichnet, dass** der Schritt des Montierens der Hülse (5) in der Weise ausgeführt wird, dass das aufgeweitete Ende (51) auf Seiten der Trägerschale (11), die der Außenfläche des Trägers entspricht, aufgeweitet ist.

8. Herstellungsverfahren nach einem der Ansprüche 1 bis 7, **dadurch gekennzeichnet, dass** es einen Schritt des Montierens eines Silentblocks (4) in der Hülse (5) enthält, wobei der Block (4) einen Kautschukteil (43) zwischen zwei koaxialen Bewehrungen (41), (42), wovon sich eine (41) innen und die andere (42) außen befindet, enthält, wobei der Montageschritt durch Eindrücken des Blocks (4) in die Hülse (5) ausgeführt wird, indem der Block durch das aufgeweitete Ende (51) der Hülse (5) eindringt.

9. Vorrichtung zum Ausführen eines Verfahrens zum Herstellen eines Trägers nach einem der Ansprüche 1 bis 8, **dadurch gekennzeichnet, dass** es enthält:
- ein Buchsenorgan (61), das einen Aufnahmesitz aufweist, der dazu bestimmt ist, die Hülse (5) aufzunehmen;
- ein Steckorgan (62), das ein verformendes Element (621) enthält, das dazu bestimmt ist, das aufgeweitete Ende (51) zu formen, wenn das Steckorgan (62) in die in dem Buchsenorgan (61) angeordnete Hülse (5) eingedrückt wird.

10. Kraftfahrzeugträger, der gemäß einem Verfahren nach einem der Ansprüche 1 bis 8 hergestellt wird, mit zwei Schalen (41), (42), die zusammengefügt sind, wobei der Träger dazu vorgesehen ist, mit wenigstens einem Silentblock (4) des Typs, der einen Kautschukteil (43) enthält, der zwischen zwei koaxialen Bewehrungen (41), (42) gehalten wird, verbunden zu werden,
**dadurch gekennzeichnet, dass** er wenigstens eine Hülse (5) für die Aufnahme des Blocks (4) enthält, wobei die Wand der Hülse an wenigstens einem ihrer Enden (51) eine eine Aufweitung bildende Verformung aufweist.

11. Kraftfahrzeugträger nach Anspruch 10, **dadurch gekennzeichnet, dass** die Hülse (5) in eine Bördelung (111) gedrückt ist, die an einer der Schalen (11) ausgebildet ist, wobei sich das aufgeweitete Ende der Hülse über die Bördelung hinaus erstreckt.

12. Kraftfahrzeugträger nach einem der Ansprüche 10 und 11, **dadurch gekennzeichnet, dass** er wenigstens einen Silentblock (4) enthält, der eine aus Kunststoff hergestellte äußere Bewehrung (42) aufweist.

13. Kraftfahrzeugträger nach einem der Ansprüche 10 bis 12, **dadurch gekennzeichnet, dass** sich das Ende (51) wenigstens teilweise in die äußere Umgebung des Trägers erstreckt.

14. Kraftfahrzeugträger nach Anspruch 13, **dadurch gekennzeichnet, dass** der oder die Silentblöcke (4) eine Verlängerung (45) aufweisen, unter der eine ringförmige Kehle (451) ausgebildet ist, die dazu bestimmt ist, für das aufgeweitete Ende (51) der Hülse (5) einen Aufnahmesitz zu bilden.

15. Kraftfahrzeugträger nach einem der Ansprüche 10 bis 14, **dadurch gekennzeichnet, dass** der oder die Silentblocke (4) einen Rand (452) aufweisen, der dazu vorgesehen ist, an einer der Schalen in Anschlag zu gelangen.

16. Kraftfahrzeug-Träger nach den Ansprüchen 14 und 15, **dadurch gekennzeichnet, dass** sich der Rand (452) um die ringförmige Kehle (451) erstreckt.

17. Kraftfahrzeug, das mit einem Träger ausgerüstet ist, der zwei zusammengefügte Schalen (11), (12) enthält, wobei der Träger mit wenigstens einem Silentblock (4) des Typs verbunden ist, der einen Kautschukteil,(43) aufweist, der zwischen zwei koaxiale Bewehrungen (41), (42) gedrückt ist,
**dadurch gekennzeichnet, dass** der Träger wenigstens eine Hülse (5) für die Aufnahme des Blocks (4) enthält, deren Wand an wenigstens einem ihrer Enden (51) eine Verformung aufweist, die eine Aufweitung bildet.
